# EUROPEAN PATENT APPLICATION

(11) **EP 1 422 391 A2**
(43) Date of publication of application: **26.05.2004**
(21) Application number: 03104257.5
(22) Date of filing: 18.11.2003
(51) Int. Cl.: F01N 3/08, F01N 3/00

(54) **A method and system for improving the efficiency of a hydrocarbon trap**

(30) Priority: 20.11.2002 US 65796
(71) Applicant: Ford Global Technologies, LLC, Dearborn, Michigan 48126 (US)
(72) Inventor: Adamczyk, Andrew A., 48124 Dearborn (US); Goralski, Christian, Thomas, 48197 Ypsilanti (US); Boone, William, P., 48125 Dearborn Heights (US)
(74) Representative: Messulam, Alec Moses

(57) **Abstract**

The present invention provides a method for removing hydrocarbons from an exhaust gas of an internal combustion engine. The method of the present invention comprises contacting the exhaust gas with a water-removing composition and then contacting the exhaust gas at a position downstream from the water-removing composition with a hydrocarbon-removing material to remove at least some of the hydrocarbons from the exhaust gas. The hydrocarbon-removing material used in the present invention has a sufficiently low Si to Al atom ratio so that less than 50% of the low molecular hydrocarbons desorb from the hydrocarbon-removing composition at a temperature within an approximate temperature range of about 250°C to about 300°C.

## Description

This invention relates to the efficiency of a hydrocarbon trap in an exhaust system of a motor vehicle and in particular to a method of improving the hydrocarbon trap efficiency by removing water from the exhaust of an internal combustion engine fitted to the motor vehicle.

Cold start hydrocarbon emissions currently account for approximately 80% of hydrocarbons emitted by motor vehicles over the U.S. Federal Test Procedure ("FTP") drive cycle.

Numerous methods have been proposed to reduce these emissions, including the use of materials to trap the hydrocarbons that are emitted from the tailpipe when the catalysts equipped on the vehicle are cold and inactive, and subsequently release them at a higher temperature when the catalyst has reached sufficient temperature that it can convert them to harmless products.

The most promising adsorbent materials used to achieve this behaviour are zeolites. It is known that zeolites can be used to reduce cold start hydrocarbon emissions by a previously described trapping mechanism. However, the interaction of water with the hydrocarbon adsorbent material has not been fully explored.

Zeolite materials are highly ordered crystalline inorganic oxide materials and typically consist of Si and Al in ratios ranging from 5:1 to ratios in excess of 500:1. These materials make excellent adsorbent materials for application in exhaust environments because they are stable under the thermal environment encountered in these applications, and the sizes of the pore openings of the zeolites are typically of the same order as the molecular dimensions of hydrocarbons found in engine exhaust. This allows the zeolite to effectively adsorb and trap these hydrocarbons. Unfortunately, these materials are also effective adsorbents for water. This leads to water competing with hydrocarbons for adsorption sites within the zeolite. The zeolite can be tailored such that the zeolite is hydrophobic by increasing the ratio of Si to Al in the zeolite structure. However, typical exhaust concentrations of water are 10-12%, whereas typical exhaust hydrocarbon concentrations are on the order of 1500 ppm. In this 100 fold excess of water, even extremely hydrophobic zeolites show significant competitive adsorption of water with hydrocarbon species, leading to poor hydrocarbon adsorption characteristics. This problem is especially significant for small to medium sized hydrocarbons that tend to adsorb in the same sites as water.

U.S. Patent No. 5,417,947 ("the '947 patent") discloses a method for removing low molecular weight hydrocarbons from a vehicle exhaust during cold start-up that uses a tandem hydrophilic olefin-removing configuration. However, the '947 patent does not describe the use of a hydrophilic trap that adsorbs water while not efficiently adsorbing low molecular weight hydrocarbons. Moreover, the prior art fails to disclose a thermally stable hydrocarbon trap (olefin-removing material) that will not allow hydrocarbon desorption until a sufficiently high temperature that catalytic material either present with the hydrocarbon trap or in a subsequent catalyst brick will be able to convert the released hydrocarbons into innocuous compounds. Accordingly, the regeneration temperature of these prior art traps is so low that no catalyst is active to convert the hydrocarbons that desorb from the trap.

It is an object of this invention to provide a method and apparatus for removing water from the exhaust gases of an internal combustion engine so as to improve the efficiency of any hydrocarbon traps through which the exhaust gases pass.

According to a first aspect of the invention there is provided a method for removing low molecular weight hydrocarbons from an exhaust gas of an internal combustion engine characterised in that the method comprises contacting the exhaust gas with a water-removing composition and contacting the exhaust gas at a position downstream from the water-removing composition with a hydrocarbon-removing material to remove at least some of the hydrocarbons from the exhaust gas wherein the hydrocarbon-removing material has a sufficiently low Si to Al atom ratio so that less than about 50% of the low molecular weight hydrocarbons desorb from the hydrocarbon-removing material at a pre-determined temperature.

The predetermined temperature may be in a range of about 250°C to 300°C.

The pre-determined temperature may be about 250°C.

Alternatively, the pre-determined temperature may be about 275°C.

As yet another alternative, the pre-determined temperature may be about 300°C.

The hydrocarbon-removing material may be a zeolite.

The hydrocarbon-removing material may be one of a pentasil zeolite, a faujasite zeolite, mordenite, a beta zeolite, ferrierite, a mesopore zeolite or may be mixtures thereof.

The hydrocarbon-removing material may be a zeolite having a Si to Al atom ratio less than about 25.

The zeolite may have a Si to Al atom ratio less than about 15.

Alternatively, the zeolite may have a Si to Al atom ratio less than about 10.

The water-removing composition may remove water vapour but not medium-sized hydrocarbons from the exhaust gas.

The water-removing composition may be a hydrophilic material.

The hydrophilic material may have a pore size of about 2 to about 5 angstroms in diameter.

Preferably, the hydrophilic material may have a pore size of about 4 angstroms in diameter.

The hydrophilic material may be selected from the group consisting of molecular sieves, aluminas, silicas, zeolites, and mixtures thereof.

According to a second aspect of the invention there is provided an exhaust system for an internal combustion engine characterised in that the exhaust system includes a hydrocarbon trap located downstream of a water trap and that the hydrocarbon trap includes a hydrocarbon-removing material having a sufficiently low Si to Al atom ratio so that less than about 50% of the low molecular weight hydrocarbons desorb from the hydrocarbon-removing material at a pre-determined temperature.

The pre-determined temperature may be substantially within the range of 250°C to 300°C.

The predetermined temperature may be about 250°C.

Alternatively, the pre-determined temperature may be about 275°C.

As yet another alternative, the pre-determined temperature may be about 300°C.

The hydrocarbon-removing material may be a zeolite.

The hydrocarbon-removing material may be one of a pentasil zeolite, a faujasite zeolite, mordenite, a beta zeolite, ferriete, a mesopore zeolite and a mixture of two or more of these materials.

The hydrocarbon-removing material may have a Si to Al atom ratio less than about 25.

The hydrocarbon-removing material may be a zeolite having a Si to Al atom ratio less than about 15.

Alternatively, the hydrocarbon-removing material may be a zeolite having a Si to Al atom ratio less than about 10.

The composition of the water trap may be such that the water trap removes water vapour but not medium-sized hydrocarbons from the exhaust gas.

The water trap may include a hydrophilic material.

The hydrophilic material may have a pore size of about 2 to 5 angstroms in diameter.

Preferably, the hydrophilic material may have a pore size of about 4 angstroms in diameter.

The invention will now be described by way of example with reference to the accompanying drawing of which:-
Figure 1 is a plot of the adsorption of a three minute pulse of a hydrocarbon ("HC") blend mixture (consisting of acetylene, ethylene, propylene, isobutylene, benzene and toluene) on a bed of HZSM5 zeolite (used as a model hydrocarbon trapping material) with a Si/Al atom ratio of 150:1 and with a water concentration of about 10%;
Figure 2 is a plot of the adsorption of a three minute pulse of a hydrocarbon blend mixture (consisting of acetylene, ethylene, propylene, isobutylene, benzene and toluene) on a bed of HZSM5 zeolite (used as a model hydrocarbon trapping material) with a Si/Al atom ratio of 150:1 and with no water present;
Figure 3 is a bar chart showing the adsorption efficiency of each species for the experiments of Figure 1 and Figure 2;
Figure 4 is a bar chart of the overall adsorption data normalized to a mass basis;
Figure 5 is a plot of the desorption data for the experiments shown in Figures 1;
Figure 6 is a plot of the desorption data for the experiments shown in Figure 2;
Figure 7 is a plot of the desorption for a 60 second pulse of 1500 ppmv hydrocarbon blend without water passed through a beta zeolite with a Si to Al atom ratio of 12.5:1 and a beta zeolite with a Si to Al atom ratio of 150;
Figure 8 is a plot of the desorption for a 60 second pulse of 1500 ppmv hydrocarbon blend with 10% water passed through a beta zeolite with a Si to Al atom ratio of 12.5:1 and a beta zeolite with a Si to Al atom ratio of 150;
Figure 9 is a plot of the hydrocarbon adsorption efficiency of zeolite 4A as a function of time with a dry inlet gas;
Figure 10 is a bar chart showing the fraction of the 60 second pulse of feed consisted of 1500 ppmv hydrocarbons, 10% H₂O, 1% CO, 0.33% H₂, 2% O₂, with a balance of N₂, adsorbed as well as the fraction of the adsorbed material oxidized for each of the three experiments; and
Figure 11 is a bar chart showing the increase in efficiency for the experiment described in Figure 8.

Reference will now be made in detail to currently preferred compositions or embodiments and methods of the invention, which constitute the best modes of practicing the invention currently known to the inventors.

In one embodiment of the present invention, a method for removing low molecular weight hydrocarbons from the exhaust of an internal combustion engine is provided.

The method of this embodiment comprises contacting the exhaust gas with a water-removing composition and contacting the exhaust gas at a position downstream from the water-removing composition with a hydrocarbon-removing material to remove at least some of the hydrocarbons from the exhaust gas. The hydrocarbon-removing material has a sufficiently low Si to Al atom ratio that less than about 50% of the low molecular weight hydrocarbons desorb from the hydrocarbon-removing material at a temperature of about 250°C. The term "low molecular weight hydrocarbons" as used herein refers to hydrocarbons having 10 or less carbon atoms. More preferably, the hydrocarbon-removing material has a sufficiently low Si to Al atom ratio that less than about 50% of the low molecular hydrocarbons desorb from the hydrocarbon-removing composition at a temperature of about 275°C, and most preferably The hydrocarbon-removing material has a sufficiently low Si to Al atom ratio that less than about 50% of the low molecular hydrocarbons desorb from the hydrocarbon-removing composition at a temperature of about 300°C. The hydrocarbon removing material will preferably comprise SiO₂ and Al₂O₃. More preferably, the hydrocarbon-removing material is a zeolite. Suitable zeolites include, but are not limited to, a pentasil zeolite, a faujasite zeolite, mordenite, a beta zeolite, ferrierite, a mesopore zeolite, or mixtures thereof.

In a particularly preferred variation of this embodiment, the hydrocarbon-removing material is a zeolites having a Si to Al atom ratio less than about 25. More preferably, the hydrocarbon-removing material of this variation is a zeolite having a Si to Al atom ratio less than about 15, and most preferably, the hydrocarbon-removing material is a zeolite having a Si to Al atom ratio less than about 10. The Si to Al atom ratio is important in ensuring that less than 50% of the low molecular hydrocarbons desorb from the hydrocarbon-removing composition at a temperature of 250°C, which is important in ensuring that a significant fraction of the hydrocarbons remain adsorbed until a sufficiently high temperature is attained so that the hydrocarbons can be converted by the catalyst.

In accordance with the method of the present invention, the water-removing composition removes water vapour but not small to medium-sized hydrocarbons from the exhaust gas. To accomplish this selective removal of water vapour, the water-removing composition preferably comprises a hydrophilic material. Preferably, the hydrophilic material with have a pores that are smaller than the size of the hydrocarbon species. Typically, the hydrophilic material has a pore size of about 2 to about 5 angstroms in diameter. More preferably, the hydrophilic material has a pore size of about 4 angstroms in diameter. Suitable hydrophilic materials include, but are not limited to, the group consisting of molecular sieves, aluminas, silicas, zeolites, and mixtures thereof. The preferred hydrophilic material is a zeolite such as Zeolite 4A (molecular sieves) which has a pore diameter of 4.1 angstroms.

The present invention can further be appreciated by a complete understanding of the relationship between the hydrocarbon removing material and the hydrophilic material. The hydrophilic material is a size-selective material that removes water while only poorly trapping hydrocarbons. The hydrocarbon removing material is a relatively polar material (due the low Si:Al atom ratio) that is capable of binding hydrocarbons more strongly than the less polar material with higher Si:Al atom ratios. These highly polar zeolites have strong affinities for both water and unsaturated hydrocarbons. It is only in the absence of water that they can bind a significant fraction of hydrocarbons. Moreover, in the absence of water, the material with a relatively low Si:Al atom ratio binds hydrocarbons more strongly than the hydrophobic zeolites. Accordingly, these lower atom ratio materials have a higher desorption temperature.

In another embodiment of the present invention, a vehicle exhaust system that removes hydrocarbons is proved.

The vehicle exhaust system of this embodiment comprises a water trap and a hydrocarbon trap comprising a hydrocarbon-removing material having a sufficiently low Si to Al atom ratio that less than about 50% of the low molecular hydrocarbons desorb from the hydrocarbon-removing material at a pre-determined temperature within a range of about 250°C to 300°C and in this case at 250°C. Moreover, the hydrocarbon trap is located downstream from the water trap in the vehicle exhaust system.

Preferably, the hydrocarbon-removing material has a sufficiently low Si to Al atom ratio so that less than about 50% of the low molecular hydrocarbons descrb from the hydrocarbon-removing composition at a temperature of about 275°C and, most preferably, the hydrocarbon-removing material has a sufficiently low Si to Al atom ratio that less than about 50% of the low molecular hydrocarbons desorb from the hydrocarbon-removing composition at a temperature of about 300°C. The hydrocarbon removing material will preferably comprise SiO₂ and Al₂O₃. More preferably, the hydrocarbon-removing material is a zeolite. Suitable zeolites include, but are not limited to, a pentasil zeolite, a faujasite zeolite, mordenite, a beta zeolite, ferriete, a mesopore zeolite, or mixtures thereof. In a particularly preferred variation of this embodiment, the zeolites have a Si to Al atom ratio less than about 25.
More preferably, in this variation, the Si to Al atom ratio less than about 15, and most preferably, the Si to Al atom ratio less than about 10.

The water trap included in the vehicle exhaust system of the present invention preferably removes water vapour but not medium-sized hydrocarbons from the exhaust gas. To accomplish this selective removal of water vapour, the water trap preferably comprises a hydrophilic material with a pore size that allows water adsorption and not hydrocarbon adsorption. The hydrophilic material will typically have a pore size of about 2 to about 5 angstroms in diameter. More preferably, the hydrophilic material has a pore size of about 4 angstroms in diameter.

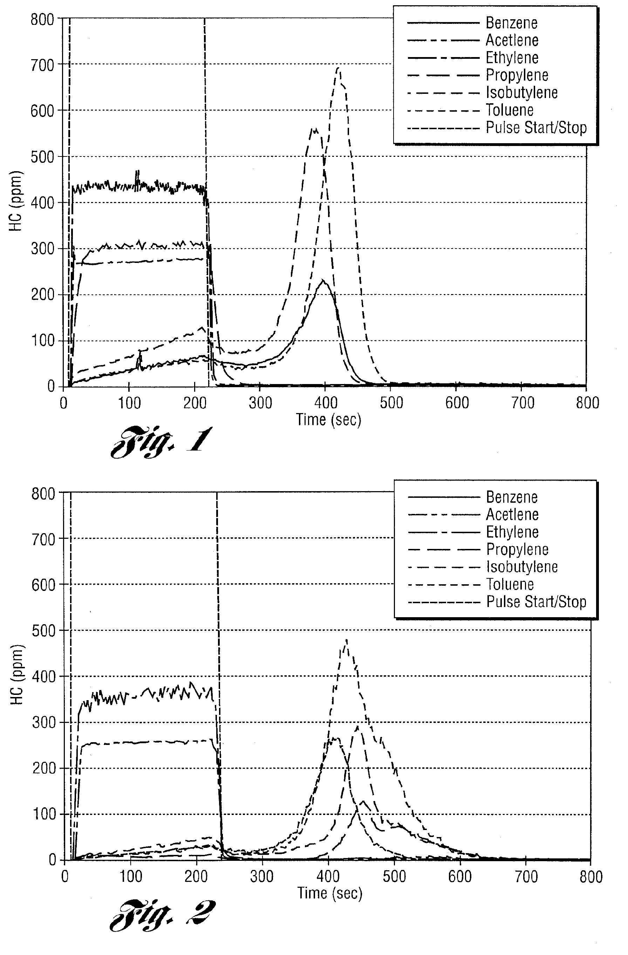

The advantages of the present invention are demonstrated by reference to Figures 1 and 2. Figures 1 and 2 show the adsorption of a three minute pulse of a hydrocarbon blend mixture (consisting of acetylene, ethylene, propylene, isobutylene, benzene, and toluene) on a bed of HZSM5 zeolite (used as a model hydrocarbon trapping material) with a Si/Al atom ratio of 150:1 with and without water present. These experiments were performed by introducing a pulse of hydrocarbons for three minutes into a quartz tube reactor containing a bed of extruded zeolite beads at 80°C followed by a temperature ramped desorption at 65°C/min to 600°C. This experiment measures both the adsorption efficiency of the various hydrocarbon species and the temperature at which the hydrocarbons desorb. It is desirable for hydrocarbon trap applications to have high adsorption efficiency as well as the desorption of the hydrocarbons take place at as high as a temperature as possible.

The experiment in Figure 1 was performed with a total hydrocarbon concentration of about 1500 ppmv and a water concentration of about 10%. The hydrocarbon feedstock used in these experiments included benzene, toluene, isobutylene, propylene, ethylene and acetylene. Hydrocarbon concentrations were measured by mass spectrometer and also by Flame Ionization Detector ("FID"), a device which measures total hydrocarbon content of a gas (but cannot differentiate by hydrocarbon species). Figure 1 shows that with water present in the feed, only the larger hydrocarbon molecules (benzene, toluene, and isobutylene) are adsorbed whereas the smaller hydrocarbon molecules pass through the bed unadsorbed. This can be compared to Figure 2 where the same experiment is repeated without water in the gas stream. In Figure 2, it is clear that not only are the larger hydrocarbon molecules adsorbed more efficiently, but significant amounts of propylene as well.

The desorption of the various hydrocarbon species in Figure 2 also takes place at later times during the experiment which is equivalent to higher temperatures. Specifically, the adsorbed hydrocarbon species such as toluene, benzene, isobutylene and propylene are observed to desorb at temperatures above 200°C with significant desorption occurring above 300°C. The maximum desorption as illustrated in Figure 2 occurs in the absence of water in the temperature range of 350°C to 550°C.

With reference to Figure 3, the adsorption efficiency of each species for the experiments shown in Figure 1 and Figure 2 is provided. As used herein, the term "absorption efficiency" is the fraction of the total amount of a species in the gas phase that is adsorbed onto the surface. Figure 3 shows that in the experiments without water, each of the large species is adsorbed more efficiently than with water and that the adsorption efficiency of propylene increased from a negligible amount with water in the feed to almost 96% without water in the feed.

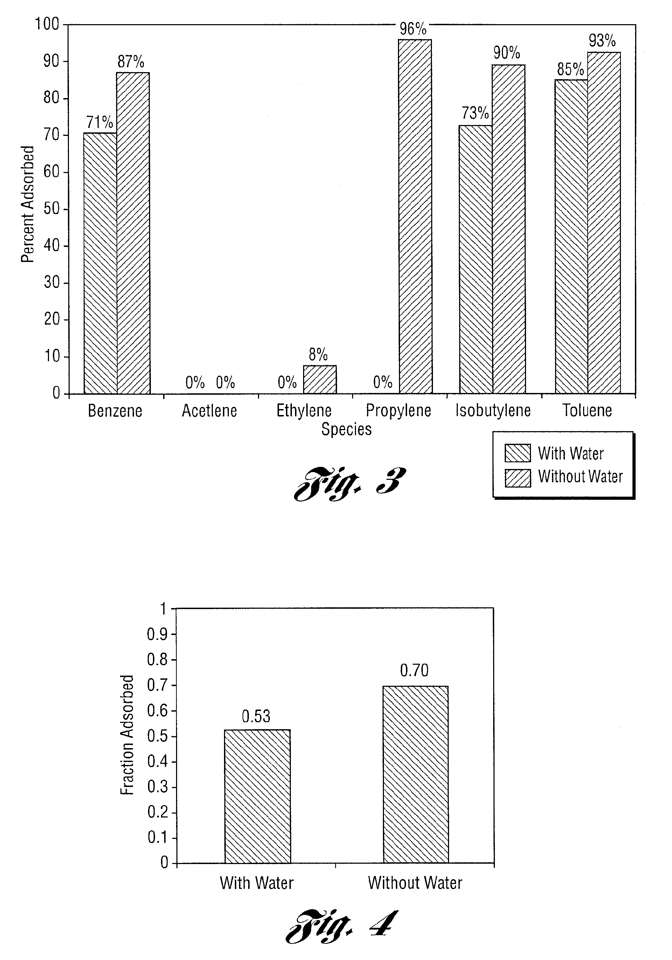

The overall adsorption data normalized to a mass basis is shown in Figure 4 which shows that with water in the feed only 53% of the total hydrocarbons in the feed were adsorbed whereas without water in the feed 70% of the hydrocarbon mass could be adsorbed.

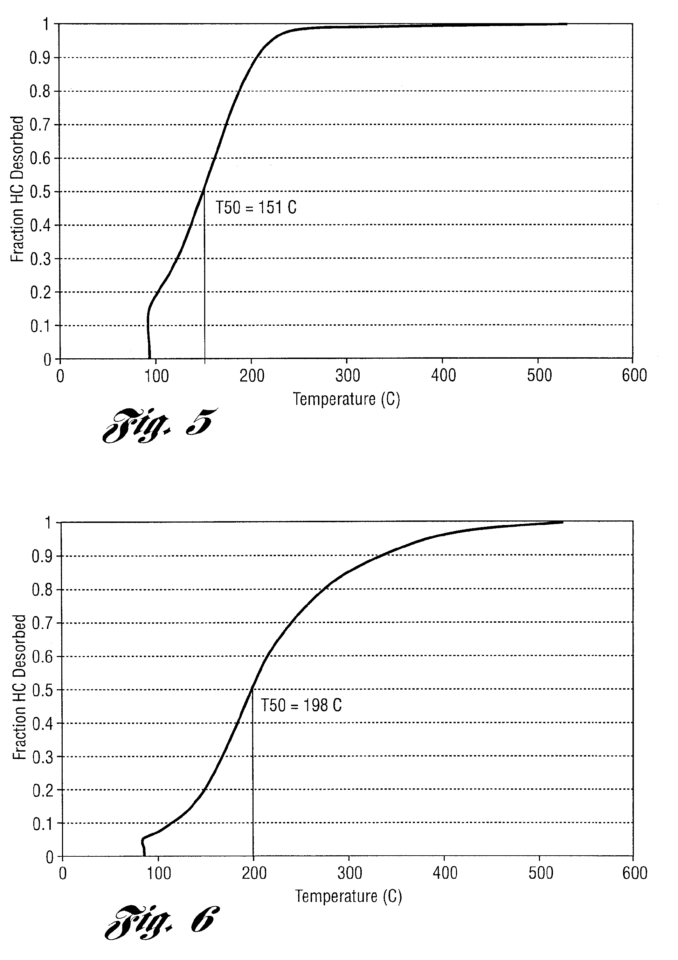

Referring now to Figures 5 and 6, desorption data for the experiments shown in Figures 1 and 2 is provided. In these figures, the total fraction of hydrocarbons desorbing is provided for all the components in the feedstock. Figures 5 and 6 plot the fraction of the total hydrocarbons desorbed as a function of temperature for the experiments with and without water, respectively. Figure 5 shows that 50% of the material desorbed from the experiment with water in the feed desorbs by a temperature of 151°C, whereas without water in the feed the temperature at which 50% of the material desorbs increases to 198°C (see Figure 6).

Collectively, Figures 1 through 6 demonstrate that water can interfere with the performance of the materials used as hydrocarbon adsorbants. One feature of the present invention is that this interference is minimized by placing a selective water adsorbing material upstream of the hydrocarbon trap. This allows hydrocarbons to be adsorbed unhindered, thus greatly improving the performance of the catalyzed hydrocarbon trap. Preferably, the water adsorbing material will have pores that are smaller than the size of the hydrocarbon species. In each of the experiments provided in Figures 1 through 6, zeolite 4A (molecular sieves) which has a pore diameter of 4.1 angstroms has been used as the water adsorbing material.

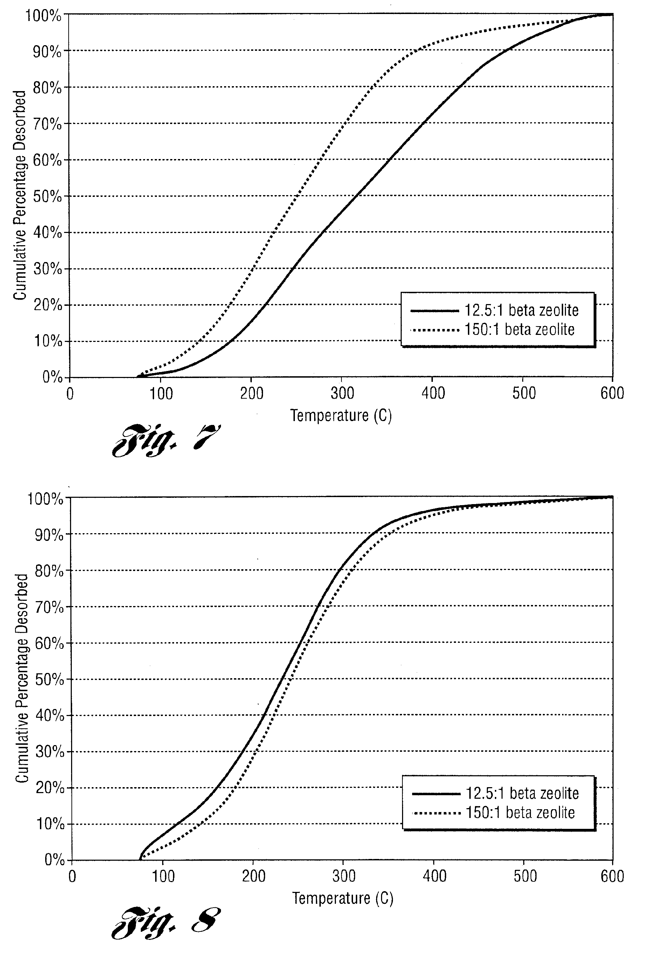

Referring to Figures 7 and 8, the desorption behaviour for two types beta zeolite with and without water is provided.

In Figure 7, the desorption for a 60 second pulse of 1500 hydrocarbon blend without water passed through a beta zeolite with a Al to Si atom ratio of 12.5:1 and 150 is plotted as a function of temperature.

Figure 8 plots the desorption under the same conditions except that 10% water is added to the pulse for these same two zeolites. Figure 7 shows that, in the absence of water, hydrocarbons desorb from the zeolite with an Si to Al atom ratio of 12.5:1 desorbs at significantly higher temperatures than from the zeolite with an Si to Al atom ratio of 150. Figure 8 shows that, in the presence of water, the temperature dependence of both types of zeolites is similar, especially with regards the onset of desorption. This is important in designing a hydrocarbon trapping system that can be properly regenerated in a vehicle exhaust. As set forth above, a proper design exhaust system should not significantly desorb hydrocarbons until the catalyst at an appropriate temperature to convert the hydrocarbons to innocuous species. Accordingly, hydrocarbon materials with low Si to Al atom ratios are most desirable.

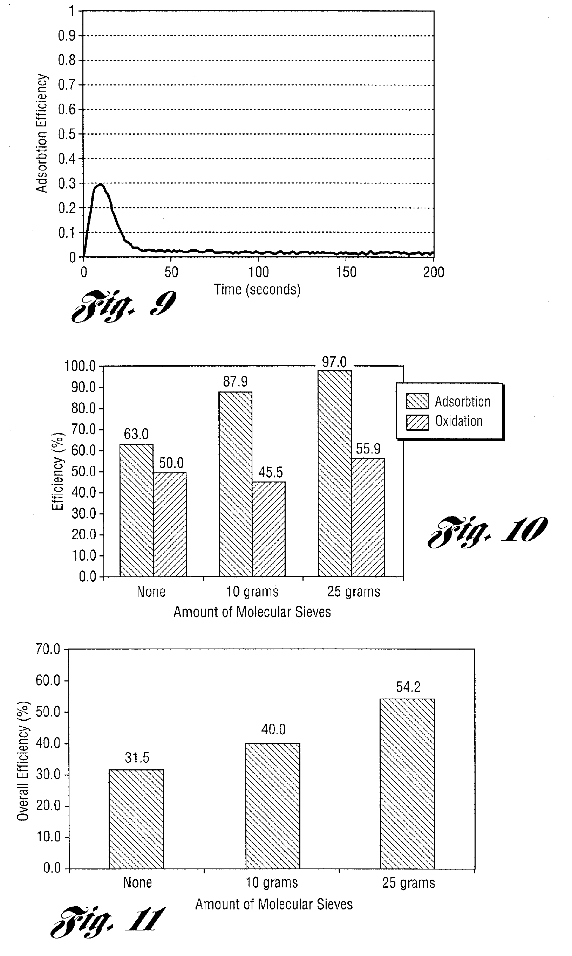

With reference to Figure 9, the hydrocarbon adsorption efficiency of zeolite 4A is shown as a function of time with a dry inlet gas (this condition should show more hydrocarbon adsorption on the water adsorption material than a condition with water in the feed). Figure 9 shows that no hydrocarbon material is adsorbed on the water adsorption material. The small measured initial efficiency is attributed to filling the void volume of the reactor system.

The performance improvement in hydrocarbon adsorption by placing a water trap upstream of a hydrocarbon trap is provided by referring to Figures 10 and 11. The experiments summarized by Figures 10 and 11 simulate the exhaust gas composition and temperature environment that a hydrocarbon trap would experience during cold start on a vehicle with and without the water trapping material present. In each experiment, a commercially available catalyzed hydrocarbon trap was placed in a flow reactor and was exposed to a 60 second pulse of the hydrocarbon blend gas described above, followed by a temperature ramped desorption/light off with sufficient oxygen present to convert the trapped hydrocarbons. In all experiments, the feed consisted of 1500 ppmv hydrocarbons, 10% H₂O, 1% CO, 0.33% H₂, 2% O₂, with a balance of N₂. The quantities measured in these experiments were the fraction of the 1 minute hydrocarbon pulse that was adsorbed and the fraction of the adsorbed material that was converted. The product of these two quantities is the overall efficiency of the experiment. The experiments were performed on a hydrocarbon trap core 1.8 inches long and 0.75 inches in diameter. Three cases were run, first with no water trapping material, second with 10 grams of water trapping material placed upstream of the hydrocarbon trap, and third with 25 grams of water trapping material placed upstream of the hydrocarbon trap. Figure 8 shows the fraction of the 60 second pulse adsorbed as well as the fraction of the adsorbed material oxidized for each of the three experiments. As the amount of water trapping material was increased from 0 to 10 to 25 grams, the fraction hydrocarbon adsorbed increase from 63 to 88 to 97%. At the same time, the fraction of the adsorbed material oxidized went from 50% to 46% to 56%. The resulting increase in efficiency is provided in Figure 9, from about 32% to 40% to 54% over the three experiments. Clearly, adding the water trapping material upstream of the hydrocarbon trap can improve not only the adsorption efficiency of the trap but also increase the desorption temperature of the trapped hydrocarbon species.

While embodiments of the invention have been illustrated and described, it is not intended that these embodiments illustrate and describe all possible forms of the invention. Rather, the words used in the specification are words of description rather than limitation, and it is understood that various changes may be made without departing from the scope of the invention as set forth in the appended claims.

## Claims

1. A method for removing low molecular weight hydrocarbons from an exhaust gas of an internal combustion engine **characterised in that** the method comprises contacting the exhaust gas with a water-removing composition and contacting the exhaust gas at a position downstream from the water-removing composition with a hydrocarbon-removing material to remove at least some of the hydrocarbons from the exhaust gas wherein the hydrocarbon-removing material has a sufficiently low Si to Al atom ratio so that less than about 50% of the low molecular weight hydrocarbons desorb from the hydrocarbon-removing material at a pre-determined temperature.

2. A method as claimed in claim 1 wherein the hydrocarbon-removing material is a zeolite.

3. A method as claimed in claim 1 or in claim 2 wherein the water-removing composition removes water vapour but not medium-sized hydrocarbons from the exhaust gas.

4. A method as claimed in any of claims 1 to 3 wherein the water-removing composition is a hydrophilic material.

5. An exhaust system for an internal combustion engine **characterised in that** the exhaust system includes a hydrocarbon trap located downstream of a water trap and that the hydrocarbon trap includes a hydrocarbon-removing material having a sufficiently low Si to Al atom ratio so that less than about 50% of the low molecular weight hydrocarbons desorb from the hydrocarbon-removing material at a pre-determined temperature.

6. A system as claimed in claim 5 wherein the pre-determined temperature is substantially within the range of 250°C to 300°C.

7. An exhaust system as claimed in claim 5 or in claim 6 wherein the hydrocarbon-removing material is a zeolite.

8. An exhaust system as claimed in any of claims 5 to 7 wherein the hydrocarbon-removing material is one of a pentasil zeolite, a faujasite zeolite, mordenite, a beta zeolite, ferriete, a mesopore zeolite and a mixture of two or more of these materials.

9. An exhaust system as claimed in any of claims 1 to 8 wherein the hydrocarbon-removing material has a Si to Al atom ratio less than about 25.

10. An exhaust system as claimed in any of claims 5 to 9 wherein the composition of the water trap is such that the water trap removes water vapour but not medium-sized hydrocarbons from the exhaust gas.

11. An exhaust system as claimed in any of claims 5 to 10 wherein the water trap includes a hydrophilic material.

12. An exhaust system as claimed in claim 11 wherein the hydrophilic material has a pore size of about 2 to 5 angstroms in diameter.
